# EUROPEAN PATENT APPLICATION

(11) **EP 3 719 977 A1**
(43) Date of publication of application: **07.10.2020**
(21) Application number: 18883711.6
(22) Date of filing: 02.11.2018
(51) Int. Cl.: H02K 11/215, H02K 11/22, H02K 11/225, H02K 11/25

(54) **MOTOR AND ELECTRIC DEVICE INCLUDING MOTOR**

(30) Priority: 30.11.2017 CN 201711239740
(71) Applicant: Nidec Corporation, Kyoto-shi, Kyoto 601-8205 (JP)
(72) Inventor: YAN, Guo-jhih, Taipei City 10053 (TW); WU, Keng-Chang, Taipei City 10053 (TW); WANG, Kuo-Min, Taipei City 10053 (TW); LIN, Hsiu-Ying, Taipei City 10053 (TW); LIN, Ming Zan, Taipei City 10053 (TW); LIN, Chiaching, Taipei City 10053 (TW)
(74) Representative: Viering, Jentschura & Partner mbB Patent- und Rechtsanwälte
(86) International application number: PCT/JP2018/040870
(87) International publication number: WO 2019/107074

(57) **Abstract**

A motor includes a shaft arranged to be rotatable around a center axis, two rotors arranged in an axial direction to have a predetermined distance and at least one of rotors including a magnet, a stator arranged between the two rotors and including a plurality of stator cores arranged in a circumferential direction and coils wound on the plurality of stator cores, and a circuit board provided between the stator and the rotor including the magnet. The circuit board includes a plurality of groove holes penetrating the circuit board in an axial direction and arranged in a circumferential direction. The plurality of stator cores are fitted into the plurality of groove holes.

## Description

### CROSS-REFERENCE TO RELATED APPLICATIONS

The present application claims priority to Chinese Application No. 201711239740.0, filed on November 30, 2017, the entire content of which is incorporated by reference herein.

### TECHNICAL FIELD

The present invention relates to a field of a motor, and more specifically, to a motor and an electric device including the motor.

### BACKGROUND ART

An example of a conventional motor that can be taken is a motor disclosed in JP 2007-274850 A. In a conventional motor, a coil of a stator assembly in the motor needs to be extracted outside a rotor and connected to a circuit board, and a sensing element is mounted on the circuit board and is induced to an additional mounting magnetic pole on the other side of the rotor. As a result, a space of the motor in an axial direction increases, which makes it difficult to assemble the motor.

### CITATIONS LIST

### PATENT LITERATURE

Patent Literature 1: JP 2007-274850 A

### SUMMARY OF INVENTION

### TECHNICAL PROBLEMS

To solve the above problem, one measure is to arrange the circuit board inside the stator assembly and arrange the detecting element on the circuit board. However, in this case, a space required for the sensing element needs to be considered, an air gap is longer, motor characteristics are lowered, a length of the motor in the axial direction is increased, and a space of the stator assembly available for the coil is consumed.

To solve the above problem, another measure is to arrange the circuit board on the stator, not in the rotation range of the rotor magnetic pole, and arrange a magnetic pole detecting element at a position on the circuit board close to the magnetic pole. However, this causes a problem in which accuracy of sensing of the magnet is not high, in which a space available for the circuit is small, and in which other elements having a sensing function cannot be arranged.

Note that the above description of the technical background is provided to clearly and completely describe a technical idea of the present invention and to facilitate understanding for those skilled in the art. The mere description of the configuration in the section of the background art of the present invention does not lead to an idea that the above configuration is well known to those skilled in the art.

To solve at least one of the above-described problems, an object of an exemplary embodiment of the present invention is to provide a motor enabling size reduction of the motor in an axial direction and an electric device including the motor.

### SOLUTIONS TO PROBLEMS

As an exemplary embodiment of the present invention, a motor includes a shaft arranged to be rotatable around a center axis, two rotors arranged in an axial direction to have a predetermined distance and at least of the rotors including a magnet, a stator arranged between the two rotors and including a plurality of stator cores arranged in a circumferential direction and coils wound on the plurality of stator cores, and a circuit board provided between the stator and the rotor including the magnet. The circuit board includes a plurality of groove holes penetrating the circuit board in an axial direction and arranged in a circumferential direction. The plurality of stator cores are fitted into the plurality of groove holes.

Also, as an exemplary embodiment of the present invention, an electric device includes the above-described motor.

### ADVANTAGEOUS EFFECTS OF INVENTION

With a motor according to an exemplary embodiment of the present invention, an air gap and a height of the motor in an axial direction are not increased, a height space occupied by a stator can be reduced, a dimension of the motor in the axial direction is decreased, and the motor can be thinner.

### BRIEF DESCRIPTION OF DRAWINGS

FIG. 1 is an exploded schematic view of a motor according to an embodiment.
FIG. 2 is a cross-sectional view of the motor according to the embodiment.
FIG. 3 is a schematic view of a stator and a circuit board of the motor according to the embodiment.
FIG. 4 illustrates a state in which sensing magnetic pole elements of the motor according to the embodiment are not mounted in through holes of the circuit board.
FIG. 5 illustrates a state in which the sensing magnetic pole elements of the motor according to the embodiment are mounted in the through holes of the circuit board.
FIG. 6 is a schematic view of a rotor with magnets.
FIG. 7 illustrates installation positions of coils of the motor according to the embodiment.
FIG. 8 illustrates an example of an installation position of a sensing element of the motor according to the embodiment.
FIG. 9 illustrates another example of the installation position of the sensing element of the motor according to the embodiment.
FIG. 10 is a schematic view of the rotor provided with an encoder disk.
FIG. 11 is another schematic view of the rotor provided with the encoder disk.

### DESCRIPTION OF EMBODIMENTS

With reference to the following description and accompanying drawings, exemplary embodiments of the present invention will be disclosed in detail, and how the principles of the present invention can be applied will be provided. The exemplary embodiments of the present invention do not limit the scope of the present invention. The exemplary embodiments of the present invention include many changes, modifications, and equivalents within the spirit and scope of the appended patent claims.

Features described and/or illustrated for one exemplary embodiment can be used in one or more other embodiments in an identical or similar manner and can be combined with or substituted for features of other embodiments.

The term "include", as used herein, means the presence of a feature, component, step, or assembly, and does not exclude the presence or addition of one or more other features, components, steps, or assemblies.

Elements and features described in one figure or one embodiment of the exemplary embodiments of the present invention can be combined with elements and features described in one or more other figures or embodiments. Also, in the figures, similar reference signs indicate corresponding components in several figures and can be used to indicate corresponding components used in one or more embodiments.

In the exemplary embodiments of the present invention, the terms "first", "second", and the like are used to distinguish different elements and do not indicate a spatial arrangement, a temporal order, and the like of these elements, and these elements should not be limited by these terms. The term "and/or" includes either one or a plurality of associated listed terms, and a combination of all of the terms. Each of the terms "include", "have", "comprise", and the like means the presence of a component, element, device, or assembly, and does not exclude the presence or addition of one or more other components, elements, devices, or assemblies.

In the exemplary embodiments of the present invention, each of the singular forms "a", "the", and the like includes the plural form, is to be interpreted broadly as "one kind" or "one sort", and does not mean "one piece" in a limited manner. Further, unless otherwise indicated, the term "above-described" should be interpreted as one including both the singular form and the plural form. Further, unless otherwise indicated, it should be understood that the term "based on" means "at least partially based on".

In the exemplary embodiments of the present invention, for convenience of description, a direction parallel to a direction extending along an axis is referred to as a radial direction, a direction along a radius around the axis is referred to as a radial direction, and a direction along a circumference around the axis is referred to as a circumferential direction. However, these expressions are used for convenience of description and do not limit a direction of the motor at the time of use and manufacture.

Hereinbelow, exemplary embodiments of the present invention will be described with reference to the drawings. These embodiments are illustrative only and do not limit the present invention.

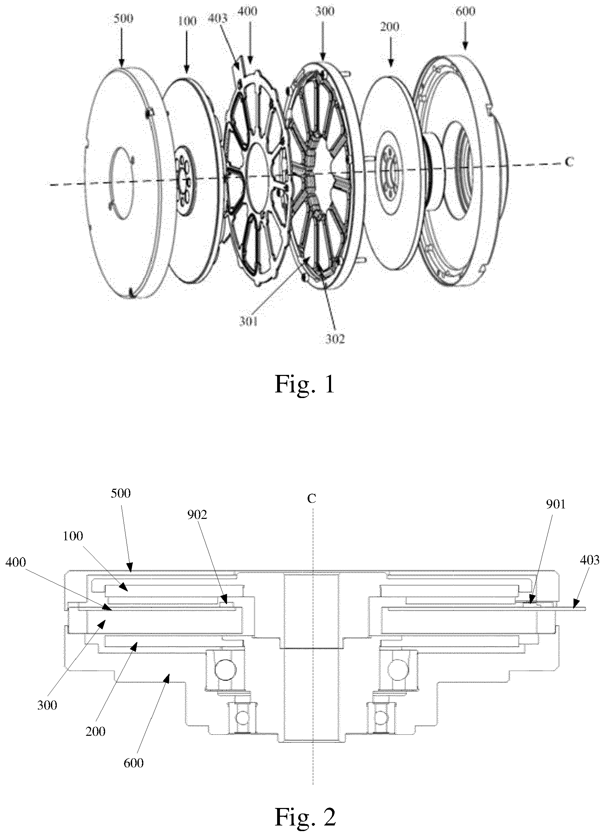

As illustrated in FIGS. 1 and 2, a motor includes a shaft (not illustrated) arranged to be rotatable around a center axis C, two rotors 100 and 200 arranged in an axial direction to have a predetermined distance and at least one of the rotors including a magnet (not illustrated) (the present embodiment provides an example in which the rotor 100 includes the magnet, and as for a method for arranging the magnet, a conventional technique can be referred to), a stator 300 arranged between the two rotors 100 and 200 and including a plurality of stator cores 301 arranged in a circumferential direction and coils 302 wound on the plurality of stator cores 301, and a circuit board 400 provided between the stator 300 and the rotor 100 including the magnet.

In the present embodiment, the circuit board 400 is opposite to the rotor 100. That is, projection to a surface, perpendicular to the axis, of a main body (that is, a disk-shaped portion) of the circuit board 400 and projection to a surface, perpendicular to the axis, of the rotor 100, overlap.

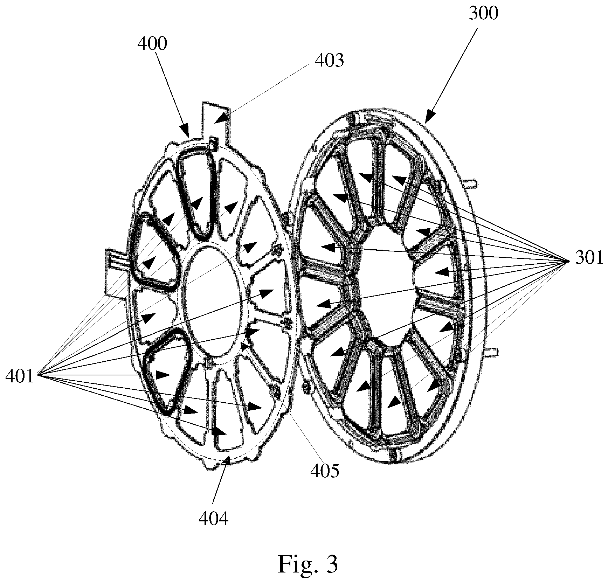

FIG. 3 is a schematic view of the stator 300 and the circuit board 400 of the motor according to the present embodiment. As illustrated in FIG. 3, in the present embodiment, the circuit board 400 includes a plurality of groove holes 401 arranged in a circumferential direction and penetrating the circuit board 400 in an axial direction, and the plurality of stator cores 301 are fitted into the plurality of groove holes 401. In the present embodiment, for convenience of description, one turn on an outside of the groove holes 401 in the circuit board 400 in a radial direction is referred to as an outer ring of the circuit board 400 and is denoted by 404, and one turn on an inside of the groove holes 401 in the circuit board 400 in the radial direction is referred to as an inner ring of the circuit board 400 and is denoted by 405.

With this configuration, by providing appropriate groove holes that match the external shapes of the stator cores and housing the stator cores in the groove holes, the stator cores can be fitted into the circuit board, positioning of the stator cores can be assisted, the height of the stator in the axial direction does not increase, the dimension of the motor in the axial direction decreases, and complexity of mounting is lowered.

In the present embodiment, the motor is an axial flux motor having a double-air-gap outer-rotor and inner-stator structure. Note that the inner stator includes respectively independent stator cores and coils wound around the respective stator cores. In general, each of the independent stator cores of the inner stator needs to be mounted at a predesigned position with an appropriate jig or means at the time of assembly. However, with the configuration according to the present embodiment, by providing the appropriate groove holes in the circuit board, the groove holes can house the stator cores and assist positioning of the stator cores.

Also, in the present embodiment, as illustrated in FIGS. 1 and 2, the motor further includes a front cover 500 and a rear cover 600. However, the structures and functions of the front cover 500 and the rear cover 600 can be found with reference to those according to a conventional technique and are not limited to those according to the present embodiment.

In the present embodiment, as illustrated in FIGS. 1 and 3, the shape of each groove hole 401 conforms to the shape of each stator core 301. For example, each of the groove holes 401 and each of the stator cores 301 are provided in a substantially fan shape as illustrated in FIGS. 1 and 3. Consequently, when each of the groove holes 401 and each of the stator cores 301 are assembled, each of the groove holes 401 and each of the stator cores 301 can be fitted into each other, which facilitates embedding of the stator cores 301 into the groove holes 401.

In the present embodiment, the number of the groove holes 401 is not limited and preferably corresponds to the number of the stator cores 301. For example, twelve groove holes 401 are provided in the circuit board 400 so that the number of the groove holes 401 may correspond to the number (twelve) of the stator cores 301, and the motor performance can be improved.

In the present embodiment, the circuit board 400 and the stator 300 can be secured by means of resin potting. For example, the coils 302 of the stator cores 301 are potted together with the circuit board 400 by means of resin to improve rigidity.

In the present embodiment, a plane on which a surface of the circuit board 400 on one side in the axial direction is located may be equal to a plane on which a surface of the stator 300 on one side in the axial direction is located or may be further on the other side in the axial direction than the surface of the stator 300 on one side in the axial direction. That is, after the circuit board 400 is mounted on the stator 300, the surface of the stator core 301 is coplanar with or is higher than the surface of the circuit board 400. Therefore, the installation of the circuit board 400 does not occupy an extra height of the stator in the axial direction, the gap between the stator and the rotor is reduced, and the torque can be increased.

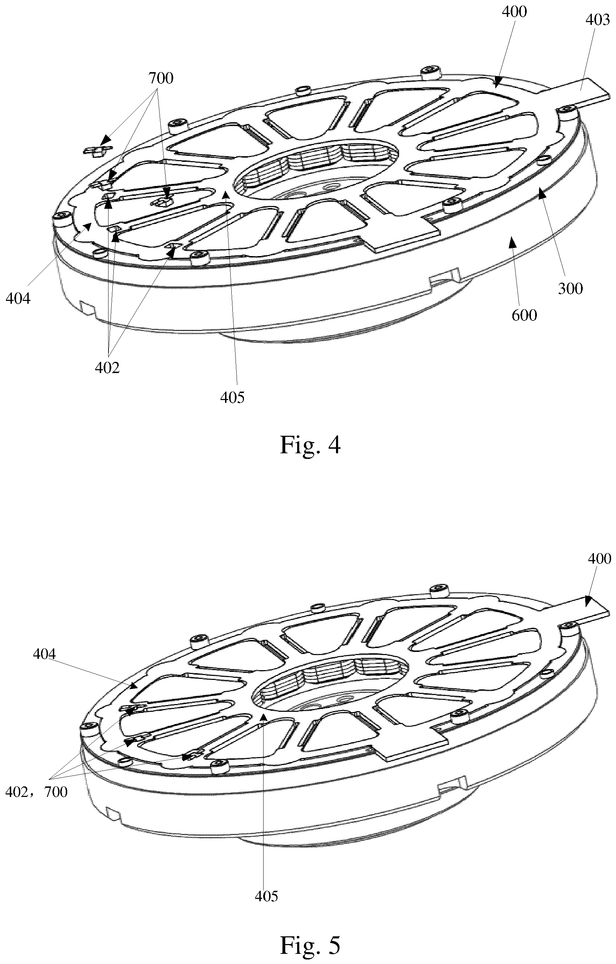

In the present embodiment, a plurality of through holes such as through holes 402 illustrated in FIGS. 4 and 5 may be provided on the periphery of the circuit board 400, and sensing magnetic pole elements 700 may be mounted in the plurality of through holes 402. FIG. 4 illustrates a state in which the sensing magnetic pole elements 700 are not mounted in the through holes 402 of the circuit board 400, and FIG. 5 illustrates a state in which the sensing magnetic pole elements 700 are mounted in the through holes 402 of the circuit board 400. With this configuration, by providing the through holes in the circuit board in advance so that the through holes may house the sensing magnetic pole elements, only fillets of the sensing magnetic pole elements are left on the circuit board, the sensing magnetic pole elements are embedded in these through holes at the time of mounting, and the fillets of the magnetic pole sensing elements are connected to pins of the circuit board.

In general, the circuit board is used to let a coil path to be connected. In a case in which the sensing magnetic pole elements such as Hall ICs are mounted on the surface of the circuit board opposite to the rotor magnet, an air gap of the motor needs to be longer than the heights of the elements, which is not a practical benefit. Also, in a case in which the sensing magnetic pole elements are mounted on the surface of the circuit board whose back is opposite to the rotor magnet, the sensing magnetic pole elements are likely to interfere with the coils of the stator core, which requires special insulation protection and increases complexity of the process and assembly.

With the configuration according to the present embodiment, the through holes are provided in advance at positions of the circuit board at which the sensing magnetic pole elements are mounted to house the sensing magnetic pole elements, only the fillets of the sensing magnetic pole elements are left on the circuit board, the height required to mount the sensing magnetic pole elements is reduced, and the sensing magnetic pole elements are located at an equal layer height position to that of the circuit board, to reduce the height of the motor in the axial direction.

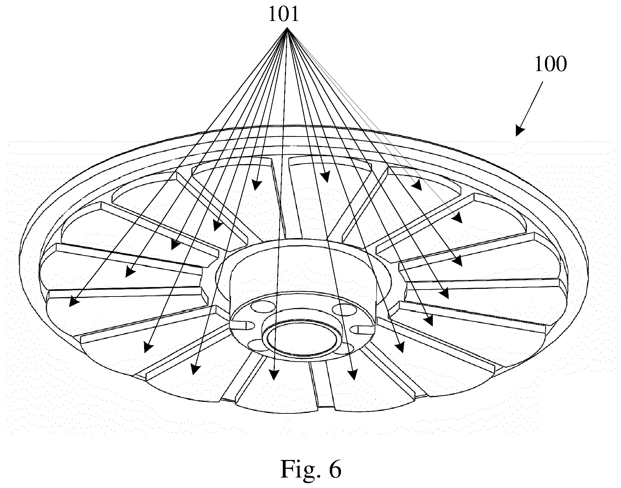

In the present embodiment, as illustrated in FIGS. 4 and 5, the plurality of through holes 402 may be located between the two adjacent groove holes 401 of the circuit board 400 and located closer to the outside in the radial direction. That is, the plurality of through holes 402 are located between the inner ring 405 and the outer ring 404 of the circuit board 400 and located closer to the outer ring 404. With this configuration, since the positions of the groove holes 401 correspond to the magnet of the rotor 100, the length of the magnet on the inside diameter side can be increased to compensate for inaccuracy of the detection accuracy, which is advantageous to size reduction of the motor, while a case in which the length of the magnet on the outside diameter side is increased has disadvantages such as an excessive increase in the volume of the magnet used and an increase in the outside diameter of the motor. Although FIGS. 4 and 5 illustrate an example in which the number of the through holes 402 is three, the present embodiment is not limited to this, and in a specific embodiment, the number and locations of the through holes 402 can be determined as needed. Meanwhile, in the present embodiment, an example is illustrated in which the rotor 100 includes a plurality of magnets. FIG. 6 is a schematic view of the rotor 100 according to an embodiment. As illustrated in FIG. 6, the rotor 100 includes a plurality of magnets 101, and the respective magnets 101 correspond to the groove holes 401.

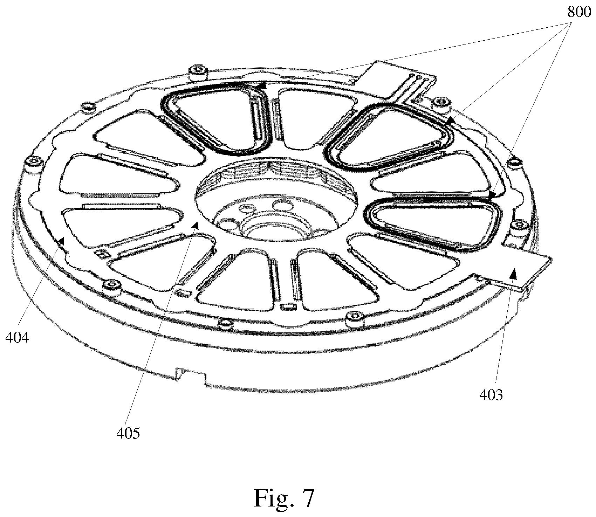

In the present embodiment, as illustrated in FIG. 7, a wire 800 opposite to the above-described coil 302 of the stator 300 in the axial direction may be arranged at a position of the circuit board 400 surrounding at least one groove hole 401. Therefore, the stator core 301 surrounded by the wire 800 detects an inductance signal induced and obtained at the time of operation to cause the inductance signal to be transmitted to an external controller, and the speed and position of the rotor and the current state for the motor are estimated through specific logical operations.

Although FIG. 7 illustrates a case in which the wires 800 are arranged at positions of the circuit board 400 surrounding the three groove holes 401, the present embodiment is not limited to this, the wires 800 may be arranged to surround another number of groove holes 401, and the wires 800 may surround the groove holes 401 located at other positions. In the present embodiment, as illustrated in FIG. 7, the wire 800 may be a spiral circuit coil or another type of circuit coil, and the present embodiment is not limited to these.

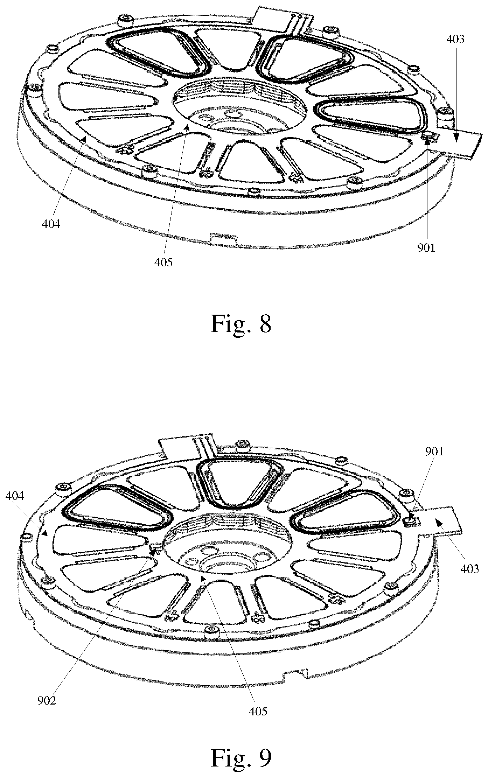

In the present embodiment, a sensing element such as a temperature-sensitive IC and a thermistor may be provided at a position on the circuit board 400 corresponding to the inside or outside of the magnet 101 in the radial direction. FIG. 8 illustrates a case in which a sensing element 901 is provided at a position of the circuit board 400 corresponding to the outside of the magnet 101 in the radial direction (the outer ring 404 of the circuit board 400). FIG. 9 illustrates a case in which a sensing element 902 is provided at a position of the circuit board 400 corresponding to the inside of the magnet 101 in the radial direction (the inner ring 405 of the circuit board 400). The positions at which the sensing elements are arranged in FIGS. 8 and 9 are illustrative, and in a specific embodiment, the sensing element may be arranged at a position of the circuit board 400 other than the inner ring 405 or the outer ring 404. As a result, since the sensing element 901 is not arranged in a region corresponding to the magnetic pole and is not arranged in a region in which interference is likely to occur, the sensing element 901 can detect a temperature inside the stator when the motor is operated.

In the present embodiment, as illustrated in FIGS. 8 and 9, the circuit board 400 includes a terminal unit 403 extending outward in the radial direction, and the sensing element 901 may be provided close to the terminal unit 403 of the circuit board 400. In this case, the above effect can be obtained in a similar manner.

In the present embodiment, the sensing element may be a position sensing element such as a position sensing IC including a transmitting end and a receiving end.

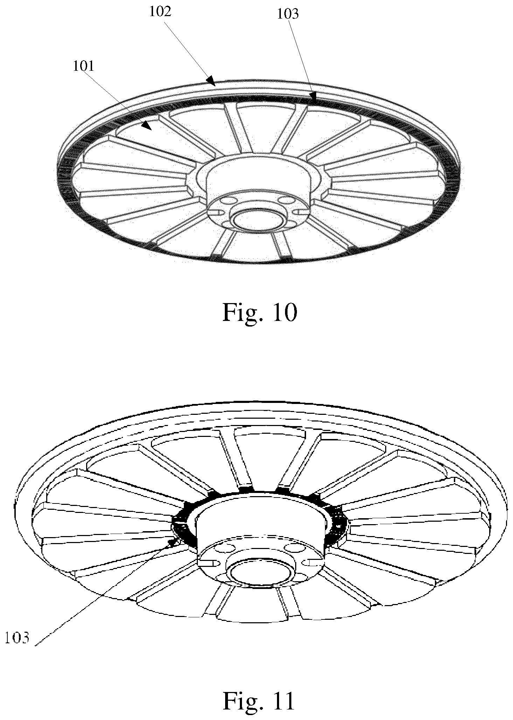

In the present embodiment, the rotor 100 may include the plurality of magnets 101 as illustrated in FIG. 6. Also, as illustrated in FIG. 10, the rotor 100 may further include a rotor frame 102 supporting the plurality of magnets 101, and an optical encoder disk may be provided on the rotor frame 102. Each of FIGS. 10 and 11 illustrates an arrangement position of the optical encoder disk 103.

In the present embodiment, as illustrated in FIGS. 10 and 11, the optical encoder disk 103 can be provided on the inside of the plurality of magnets 101 in the radial direction (FIG. 11) or on the outside of the plurality of magnets 101 in the radial direction (FIG. 10). Hence, the transmitting end (optical transmitting head) of the position sensing IC arranged on the circuit board 400 transmits a light source onto the encoder disk 103, a stripe (slit) on the encoder disk 103 reflects a signal for a difference between light and dark, and the receiving end (optical reading head) of the position sensing IC receives this signal, reads an angular position, and converts this signal into information about an angle and speed of the rotor 100. In the present embodiment, the signal may be transmitted via the terminal unit 403 to a motor control unit (not illustrated) provided externally or on the circuit board 400, and corresponding processing may be performed. In this configuration, the height of the motor in the axial direction does not increase although the encoder disk 103 and the corresponding position sensing element are arranged in the configuration space for the motor. Also, since both the encoder disk 103 and the position sensing element can be provided on the outer ring 404 or the inner ring 405 of the circuit board 400, two options of low cost and high accuracy are provided.

In the present embodiment, the optical encoder disk 103 may be made of a reflective material to reflect a light source transmitted from the optical transmitting head of the position sensing IC.

In the present embodiment, the optical encoder disk 103 and the rotor frame 102 may be formed integrally or separately. Also, in a case in which the optical encoder disk 103 and the rotor frame 102 are formed separately, the optical encoder disk 103 may be bonded to the rotor frame 102 via an adhesive. However, the present embodiment is not limited to this, and the forming method can be selected more flexibly.

In the above embodiment, due to the design of the circuit board, assembly and positioning of the stator cores can be assisted, and complexity of the structure and the assembly thereof can be simplified. Also, by mounting the magnetic pole sensing element in a range opposite to the rotor magnet, a rotor position can reliably be detected, and a space occupied by the circuit board and the element can be minimized. Also, by arranging the spiral coil around the groove hole in the circuit board, the inductance of the core can additionally be detected, is used for analysis and recording by means of a back-end controller, and is used to estimate a failure or error in advance. Also, by arranging various necessary sensing elements at other positions on the circuit board, an operating state of the motor can be recorded or transmitted, is used for analysis and recording by means of a back-end controller, and is used to estimate a failure or error in advance.

With the configuration of the motor according the present embodiment, it is possible to provide a motor having a function of a smart motor feeding back a plurality of physical state signals so as to be compatible with future products in application fields such as a robot, a vehicle, a household, and business while maintaining compact and high-performance features.

In another exemplary embodiment, an electric device including the motor described in the above embodiment and other conventional components is provided. The present embodiment does not limit a configuration, an installation method, and a function of each of the conventional components, and a conventional technique can be referred to.

In the present embodiment, based on the structure of the motor according to the above-described embodiment, by incorporating the circuit board in the inner stator of the motor (for example, a thin axial flux motor), connecting the motor coil wire, and arranging various necessary sensing elements, the air gap and the height of the motor in the axial direction are not increased, the height space occupied by the stator can be reduced, and the dimension of the motor in the axial direction is shortened.

While the present invention has been described above with reference to particular embodiments, it will be apparent to those skilled in the art that these descriptions are illustrative and do not limit the scope of the present invention. Those skilled in the art can make changes and modifications within the scope of the present invention based on the spirit and principle of the present invention.

### REFERENCE SIGNS LIST

- 100, 200: rotor
- 102: rotor frame
- 103: optical encoder disk
- 300: stator
- 301: stator core
- 400: circuit board
- 401: groove hole
- 402: through hole
- 403: terminal unit
- 700: sensing magnetic pole element
- 800: wire
- 901: sensing element

## Claims

1. A motor comprising:
a shaft arranged to be rotatable around a center axis;
two rotors arranged in an axial direction to have a predetermined distance and at least one of rotors including at least one magnet;
a stator arranged between the two rotors and including a plurality of stator cores arranged in a circumferential direction and coils wound on the plurality of stator cores; and
a circuit board provided between the stator and the rotor including the magnet,
wherein the circuit board includes a plurality of groove holes penetrating the circuit board in an axial direction and arranged in a circumferential direction, and
wherein the plurality of stator cores are fitted into the plurality of groove holes.

2. The motor according to claim 1, wherein a plane on which a surface of the circuit board on a first side in the axial direction is located is equal to a plane on which a surface of the stator on a first side in the axial direction is located or is further on a second side in the axial direction than the surface of the stator on the first side in the axial direction.

3. The motor according to claim 1 or 2, wherein a plurality of through holes are provided on a periphery of the circuit board, and sensing magnetic pole elements are mounted in the plurality of through holes.

4. The motor according to claim 3, wherein the plurality of through holes are located between the two adjacent groove holes of the circuit board closer to an outside in a radial direction.

5. The motor according to any one of claims 1 to 4, wherein a wire opposite to the coil of the stator in the axial direction is arranged at a position of the circuit board surrounding at least one of the groove holes.

6. The motor according to claim 5, wherein the wire is spiral.

7. The motor according to any one of claims 1 to 6, wherein a sensing element is further provided at a position on the circuit board corresponding to an inside or outside of the magnet in the radial direction.

8. The motor according to claim 7, wherein the circuit board further includes a terminal unit extending outward in the radial direction, and the sensing element is provided at a position close to the terminal unit.

9. The motor according to claim 7 or 8, wherein the sensing element is a position sensing element having a transmitting end and a receiving end.

10. The motor according to any one of claims 1 to 9, wherein the plurality of magnets are provided, the rotor further includes a rotor frame supporting the plurality of magnets, and an optical encoder disk is provided on the rotor frame.

11. The motor according to claim 10, wherein the optical encoder disk is provided on an inside of the plurality of magnets in the radial direction or on an outside of the plurality of magnets in the radial direction.

12. The motor according to claim 10 or 11, wherein the optical encoder disk is made of a reflective material.

13. The motor according to any one of claims 10 to 12, wherein the optical encoder disk is formed integrally with or separately from the rotor frame.

14. The motor according to claim 13, wherein, in a case in which the optical encoder disk is formed separately from the rotor frame, the optical encoder disk is bonded to the rotor frame via an adhesive.

15. The motor according to any one of claims 1 to 14, wherein a shape of each of the groove holes conforms to a shape of each of the stator cores.

16. The motor according to any one of claims 1 to 15, wherein the number of the groove holes is twelve.

17. The motor according to any one of claims 1 to 6, wherein the circuit board and the stator are secured by means of resin potting.

18. An electric device comprising the motor according to any one of claims 1 to 17.
